# EUROPEAN PATENT SPECIFICATION

(11) **EP 1 858 169 B1**
(45) Date of publication and mention of the grant of the patent: **08.10.2008**
(21) Application number: 06252555.5
(22) Date of filing: 16.05.2006
(51) Int. Cl.: H04B 1/30

(54) **Mobile wireless communications device having low IF receiver circuitry that adapts to radio environment**
Drahtloses mobiles Kommunikationsgerät dessen Empfangsschaltung mit niedriger Zwischenfrequenz sich der Funkumgebung anpasst
Appareil de communication mobile sans fil ayant un circuit récepteur à fréquence intermédiaire basse s'adaptant à l'environnement radio

(43) Date of publication of application: 21.11.2007
(73) Proprietor: Research In Motion Limited, Waterloo, Ontario N2L 3W8 (CA)
(72) Inventor: Kravets, Oleksiy, Kitchener, Ontario N2E 3Z8 (CA)
(74) Representative: Fennell, Gareth Charles

(56) References cited:
- WO-A-00/11795
- WO-A-98/43364
- US-A- 5 963 856
- US-A1- 2003 060 180
- US-A1- 2006 068 739

## Description

### Field of the Invention

The present invention relates to the field of communications devices, and more particularly, to mobile wireless communications devices and related systems and methods that use low IF receiver circuitry that adapts to the radio environment.

### Background of the Invention

Cellular communication systems continue to grow in popularity and have become an integral part of both personal and business communications. Cellular telephones and similar devices allow users to place and receive phone calls most anywhere they travel. Moreover, as cellular telephone technology is increased, so too has the functionality of cellular devices. For example, many cellular devices now incorporate Personal Digital Assistant (PDA) features such as calendars, address books, task lists, calculators, memo and writing programs, etc. These multi-function devices usually allow users to send and receive electronic mail (email) messages wirelessly and access the internet via a cellular network and/or a wireless local area network (WLAN), for example.

Many of the cellular communications use packet burst transmissions as part of a Global System for Mobile communications (GSM) system, which includes the 450 MHz, 900 MHz, 1800 MHz and 1900 MHz frequency bands. The current generation of wireless transceivers typically use two main types of receiver architectures, i.e., a direct conversion receiver architecture or a digital low-IF receiver architecture (also termed very low-IF, i.e., VLIF), thus, eliminating much of the prior generation analog down conversion stage. Much of the expensive and bulky intermediate frequency (IF) components used in conventional superheterodyne receivers has been eliminated with direct conversion and low-IF receiver architecture. In a direct conversion receiver, a signal is converted directly to baseband, while in a digital low-IF receiver, some advantages of the superheterodyne remain with the economic and integrated advantages of a direct conversion receiver.

In a low-IF receiver, on the other hand, the RF signal can be mixed down to a non-zero low or moderate intermediate frequency, typically a few megahertz in some examples. Thus, the low-IF receiver architecture includes many of the desirable properties of the zero-IF receiver architectures, yet still avoids DC offset and some 1/F-noise problems. The non-zero IF receiver architecture will reintroduce some signal image issues. In a low-IF receiver, the RF signal is band selected and downconverted to the frequency close to baseband, sometimes as close as 100 KHz. This low-IF signal can be filtered with a low pass filter and amplifier before its conversion to the digital domain by an analog-to-digital converter (ADC). Any final signal downconversion for baseband and fine gain control can be performed digitally in a processor.

It is also possible to incorporate some high-resolution, oversampling and delta-sigma converters to permit channel filtering, including the use of digital signal processing (DSP) techniques rather than analog filters. The signal could interface to a digital processor or a digital-to-analog converter and output analog Inphase (I) and Quadrature (Q) signals to the processor.

An important GSM receiver parameter is the rejection of interferer signals to enhance performance of the low-IF receiver. European Telecommunications Standards Institute (ESTI) mobile station conformance specifies very strict certification tests (14.5, 14.18.3) that are not easy to pass using GSM receivers currently available on the market. Even if a receiver passes certification tests, having better performance resulting from interferer signal rejection may significantly improve end-user experience in large urban areas, where strong radio interference is a common problem.

Rejection of interferer signals is usually a problem for very low-IF receiver architecture where rejection performance is limited by I/Q gain and phase imbalance. The common way to address this problem is to use I/Q imbalance calibration where I/Q gain and phase will be adjusted during digital baseband processing based on previously calculated calibration tables. Unfortunately, these types of calibration processes do not provide enough accuracy when time measurements during calibration cycle are limited. If the calibration time is extended, however, the manufacturing costs for a single communications device may increase significantly.

Some proposals to solve such problems toggle the local oscillator (LO) with a "round-robin" scheme using a low-side LO injection during one receive (RX) session and a high-side LO injection in another session. This solution does not use any feedback from the radio environment, thus achieving only a basic "averaging" of the interferer image. There is typically no knowledge of the external environment. Also, by not taking the type of signal used in the receive session into account, results in a worst case scenario when, for example, distorted signal bursts are mixed with Received Signal Strength Indication (RSSI) measurements, and the resulting data stream picks the worst interferer appearance. US 2006/0068739 discloses a receiver, receiving method and portable wireless apparatus.

### Summary of the Invention

In accordance with non-limiting examples, a mobile wireless communications device includes a housing and circuit board carried by the housing. The circuit board includes a radio frequency (RF) circuit and processor operative with each other. The RF circuitry includes a low-IF receiver circuit that is operative for maintaining an interferer signal at the same frequency as a wanted signal relative to a local oscillator frequency setting, creating an interferer image signal, and filtering the image signal at substantially baseband frequency.

A radio frequency (RF) circuit can include a Digital Signal Processing (DSP) circuit that is operative for filtering the interferer image signal. The RF circuitry can be operative for placing an interferer signal in the substantially baseband frequency where a highest out-of-band signal attenuation is implemented.

In yet another aspect, the RF circuitry can include at least one mixer circuit and a local oscillator circuit. A demodulator circuit that could comprise an analog-to-digital converter, digital mixer and processor is operative for demodulating signals. The RF circuitry is operative for determining between the better performing local oscillator frequency setting and a poorer performing local oscillator frequency setting based on signal-to-noise values obtained during demodulation. The RF circuitry can also be operative for using different low-IF local oscillator frequency settings for an RF channel based on the signal-to-noise values.

The communications signals can be formed as data bursts in accordance with the global system for mobile communications. The RF circuitry can also be operative for returning to a poorer performing local oscillator frequency setting from a better performing local oscillator frequency setting after a predetermined number of received data bursts to determine if the local oscillator frequency setting should be changed to adapt to a changed radio environment.

A method aspect and radio receiver are also set forth.

### Brief Description of the Drawings

Other objects, features and advantages will become apparent from the detailed description which follows when considered in light of the accompanying drawings in which:

FIG. 1 is a schematic block diagram of an example of a mobile wireless communications device configured as a handheld device that can be used in accordance with non-limiting examples and illustrating basic internal components thereof.

FIG. 2 is a front elevation view of the mobile wireless communications device of FIG. 1.

FIG. 3 is a schematic block diagram showing basic functional circuit components that can be used in the mobile wireless communications device of FIGS. 1-2.

FIG. 4 is a high-level, schematic circuit and block diagram of a low-IF receiver that can use the system and method for adapting to the environment in accordance with non-limiting examples.

FIG. 5 is a graph showing an interferer signal, a wanted signal and a local oscillator (signal) having a negative frequency offset from the desired central frequency.

FIG. 6 is a graph similar to that shown in FIG. 5, but after radio frequency (RF) downconversion, and showing the interferer image signal that appears and results from the I/Q imbalance for the amplitude and phase.

FIG. 7 is a graph similar to FIG. 5, and showing the interferer signal and wanted signals and a positive side local oscillator signal and having a positive frequency offset.

FIG. 8 is a graph similar to FIG. 7, and showing the interferer signal and the wanted signal and the wanted signal image and interferer image.

### Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

In accordance with one non-limiting example, the limitations caused by, for example, calibration time being extended can be overcome by adjusting the radio frequency (RF) circuit configuration at "run time" based on the current radio environment "quality." Thus, an issue that is addressed is the strong, narrow-band (unmodulated) interferer rejection, which is addressed by placing the interferer in the baseband frequency where the highest out-of-band signal attenuation is implemented. Since most of the very low-IF receivers have non-symmetrical frequency response, this could aid in preventing signal waveform clipping in baseband analog/digital converters.

The system and method can be based on radio channel feedback statistics, for example, the statistics of the signal-to-noise (SNR) ratio from the demodulation of the GSM bursts that are collected during regular receiver operation. SNR statistics can be collected for all used GSM channels. Different low-IF local oscillator (LO) frequencies or frequency settings can be used for the same channel. As soon as a strong interferer appears either in the lower or the higher frequency, the SNR from the GSM burst demodulation will identify which LO frequency setting has a worst or poorer performing performance compared to other LO settings. The proposed algorithm creates a map of all used radio channels and will try to adjust the local oscillator frequency setting "on-the-fly" to receive the signals using the "best guess," i.e., better performing LO configuration. The system and method can use an algorithm that could return to the worst or poorer performing case LO frequency configuration after a predefined amount of received sessions to check for any radio environment "improvements." As a result, the system and method can maintain the interferer at the same frequency side as the wanted signal relative to the LO frequency setting, thus creating an interferer "image" out of the wanted signal band, and filtered out in the baseband Digital Signal Processing (DSP) circuit.

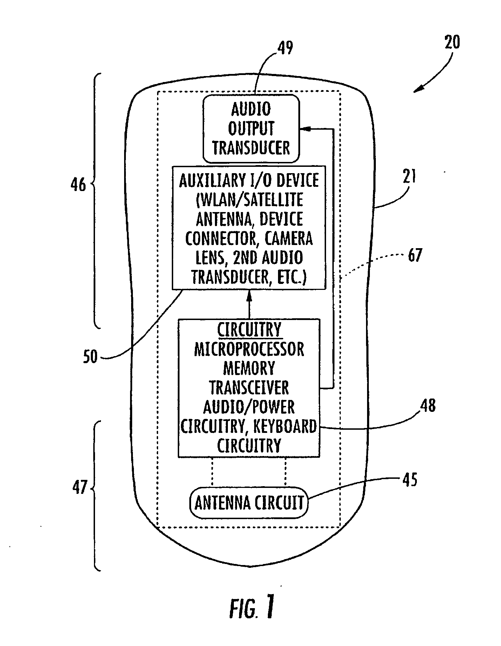

A brief description will now proceed relative to FIGS. 1-3, which disclose an example of a mobile wireless communications device, for example, a handheld portable cellular radio, which can incorporate non-limiting examples of various circuits that can be used with the low-IF receiver circuitry that adapts to the environment as will be described below. FIGS. 1-3 are representative non-limiting examples of the many different types of functional circuit components and their interconnection, and operative for use with low-IF receiver circuitry.

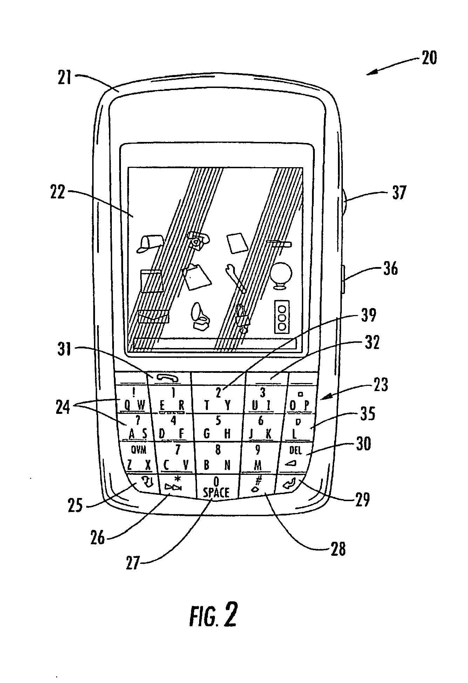

Referring initially to FIGS. 1 and 2, an example of a mobile wireless communications device **20**, such as a handheld portable cellular radio is first described. This device **20** illustratively includes a housing **21** having an upper portion **46** and a lower portion **47**, and a dielectric substrate (i.e., circuit board) **67**, such as a conventional printed circuit board (PCB) substrate, for example, carried by the housing. A housing cover (not shown in detail) would typically cover the front portion of the housing. The term circuit board **67** as used hereinafter can refer to any dielectric substrate, PCB, ceramic substrate or other circuit carrying structure for carrying signal circuits and electronic components within the mobile wireless communications device **20**. The illustrated housing **21** is a static housing, for example, as opposed to a flip or sliding housing which are used in many cellular telephones. However, these and other housing configurations may also be used.

Circuitry **48** is carried by the circuit board **67,** such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **21** for supplying power to the circuitry **48**. The term RF circuitry could encompass the interoperable RF transceiver circuitry, power circuitry and audio circuitry.

Furthermore, an audio output transducer **49** (e.g., a speaker) is carried by an upper portion **46** of the housing **21** and connected to the circuitry **48**. One or more user input interface devices, such as a keypad (keyboard) **23** (FIG. 2), is also preferably carried by the housing **21** and connected to the circuitry **48**. The term keypad as used herein also refers to the term keyboard, indicating the user input devices having lettered and/or numbered keys commonly known and other embodiments, including multi-top or predictive entry modes. Other examples of user input interface devices include a scroll wheel **37** and a back button **36**. Of course, it will be appreciated that other user input interface devices (e.g., a stylus or touch screen interface) may be used in other embodiments.

An antenna **45** is preferably positioned at the lower portion **47** in the housing and can be formed as a pattern of conductive traces that make an antenna circuit, which physically forms the antenna. It is connected to the circuitry **48** on the main circuit board **67**. In one non-limiting example, the antenna could be formed on an antenna circuit board section that extends from the main circuit board at the lower portion of the housing. By placing the antenna **45** adjacent the lower portion **47** of the housing **21**, the distance is advantageously increased between the antenna and the user's head when the phone is in use to aid in complying with applicable SAR requirements. Also, a separate keyboard circuit board could be used.

More particularly, a user will typically hold the upper portion of the housing **21** very close to his head so that the audio output transducer **49** is directly next to his ear. Yet, the lower portion **47** of the housing **21** where an audio input transducer (i.e., microphone) is located need not be placed directly next to a user's mouth, and can be held away from the user's mouth. That is, holding the audio input transducer close to the user's mouth may not only be uncomfortable for the user, but it may also distort the user's voice in some circumstances. In addition, the placement of the antenna **45** adjacent the lower portion **47** of the housing **21** also advantageously spaces the antenna farther away from the user's brain.

Another important benefit of placing the antenna **45** adjacent the lower portion **47** of the housing **21** is that this may allow for less impact on antenna performance due to blockage by a user's hand. That is, users typically hold cellular phones toward the middle to upper portion of the phone housing, and are therefore more likely to put their hands over such an antenna than they are an antenna mounted adjacent the lower portion **47** of the housing **21**. Accordingly, more reliable performance may be achieved from placing the antenna **45** adjacent the lower portion **47** of the housing **21**.

Still another benefit of this configuration is that it provides more room for one or more auxiliary input/output (I/O) devices **50** to be carried at the upper portion **46** of the housing. Furthermore, by separating the antenna **45** from the auxiliary I/O device(s) **50**, this may allow for reduced interference therebetween.

Some examples of auxiliary I/O devices **50** include a WLAN (e.g., Bluetooth, IEEE 802.11) antenna for providing WLAN communication capabilities, and/or a satellite positioning system (e.g., GPS, Galileo, etc.) antenna for providing position location capabilities, as will be appreciated by those skilled in the art. Other examples of auxiliary I/O devices **50** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) **50** means that such devices may have input and/or output capabilities, and they need not provide both in all embodiments. That is, devices such as camera lenses may only receive an optical input, for example, while a headphone jack may only provide an audio output.

The device **20** further illustratively includes a display **22**, for example, a liquid crystal display (LCD) carried by the housing **21** and connected to the circuitry **48**. A back button 36 and scroll wheel **37** can also be connected to the circuitry **48** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25**, a next key **26**, a space key **27**, a shift key **28**, a return (or enter) key **29**, and a backspace/delete key **30**.

The next key **26** is also used to enter a "*" symbol upon first pressing or actuating the alternate function key **25**. Similarly, the space key **27**, shift key **28** and backspace key **30** are used to enter a "0" and "#", respectively, upon first actuating the alternate function key **25**. The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25**, while the top row symbols are entered by first pressing the alternate function key. As seen in FIG. 2, the multi-symbol keys **24** are arranged in the first three rows on the keypad **23** below the send and end keys **31**, **32**. Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25**-**29**) is arranged in five columns. The multi-symbol keys **24** in the second, third, and fourth columns of the first, second, and third rows have numeric indicia thereon (i.e., 1 through 9) accessible by first actuating the alternate function key **25**. Coupled with the next, space, and shift keys **26**, **27**, **28,** which respectively enter a "*", "0", and "#" upon first actuating the alternate function key **25**, as noted above, this set of keys defines a standard telephone keypad layout, as would be found on a traditional touch-tone telephone, as will be appreciated by those skilled in the art.

Accordingly, the mobile wireless communications device **20** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

The antenna **45** is preferably formed as a multi-frequency band antenna, which provides enhanced transmission and reception characteristics over multiple operating frequencies. More particularly, the antenna **45** is designed to provide high gain, desired impedance matching, and meet applicable SAR requirements over a relatively wide bandwidth and multiple cellular frequency bands. By way of example, the antenna **45** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well. To conserve space, the antenna **45** may advantageously be implemented in three dimensions although it may be implemented in two-dimensional or planar embodiments as well.

The mobile wireless communications device shown in FIGS. 1 and 2 can incorporate e-mail and messaging accounts and provide different functions such as composing e-mail, PIN messages, and SMS messages. The device can manage messages through an appropriate menu that can be retrieved by choosing a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

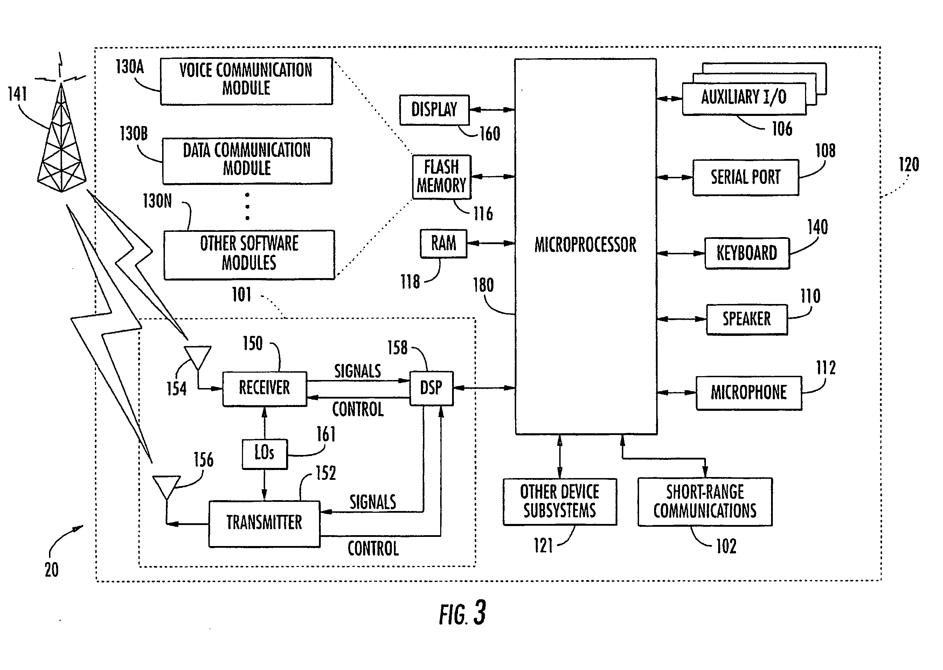

A non-limiting example of various functional components that can be used in the exemplary mobile wireless communications device **20** of FIGS. 1 and 2 is further described in the example below with reference to FIG. 3. The device **20** illustratively includes a housing **120**, a keypad **140** and an output device **160**. The output device 160 shown is preferably a display, which is preferably a full graphic LCD. Other types of output devices may alternatively be used. A processing device **180** is contained within the housing **120** and is coupled between the keypad **140** and the display **160**. The processing device **180** controls the operation of the display **160**, as well as the overall operation of the mobile device **20**, in response to actuation of keys on the keypad **140** by the user.

The housing **120** may be elongated vertically, or may take on other sizes and shapes (including clamshell housing structures). The keypad may include a mode selection key, or other hardware or software for switching between text entry and telephony entry.

In addition to the processing device **180**, other parts of the mobile device 20 are shown schematically in FIG. 3. These include a communications subsystem 101; a short-range communications subsystem **102**; the keypad **140** and the display **160,** along with other input/output devices **106, 108, 110** and **112**; as well as memory devices **116**, **118** and various other device subsystems **121**. The mobile device **20** is preferably a two-way RF communications device having voice and data communications capabilities. In addition, the mobile device **20** preferably has the capability to communicate with other computer systems via the Internet.

Operating system software executed by the processing device **180** is preferably stored in a persistent store, such as the flash memory **116**, but may be stored in other types of memory devices, such as a read only memory (ROM) or similar storage element. In addition, system software, specific device applications, or parts thereof, may be temporarily loaded into a volatile store, such as the random access memory (RAM) **118**. Communications signals received by the mobile device may also be stored in the RAM **118**.

The processing device 180, in addition to its operating system functions, enables execution of software applications **130A-130N** on the device **20.** A predetermined set of applications that control basic device operations, such as data and voice communications **130A** and **130B**, may be installed on the device **20** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **141**. Preferably, the PIM data items are seamlessly integrated, synchronized and updated via the wireless network **141** with the device user's corresponding data items stored or associated with a host computer system.

Communication functions, including data and voice communications, are performed through the communications subsystem **101**, and possibly through the short-range communications subsystem. The communications subsystem **101** includes a receiver **150**, a transmitter **152**, and one or more antennae **154** and **156**. In addition, the communications subsystem **101** also includes a processing module, such as a digital signal processor (DSP) **158**, and local oscillators (LOs) **161**. The specific design and implementation of the communications subsystem **101** is dependent upon the communications network in which the mobile device **20** is intended to operate. For example, the mobile device **20** may include a communications subsystem **101** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **20**.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **20** may send and receive communications signals over the communication network **141**. Signals received from the communications network **141** by the antenna **154** are routed to the receiver **150**, which provides for signal amplification, frequency down conversion, filtering, channel selection, etc., and may also provide analog to digital conversion. Analog-to-digital conversion of the received signal allows the DSP **158** to perform more complex communications functions, such as demodulation and decoding. In a similar manner, signals to be transmitted to the network **141** are processed (e.g., modulated and encoded) by the DSP **158** and are then provided to the transmitter **152** for digital to analog conversion, frequency up conversion, filtering, amplification and transmission to the communication network **141** (or networks) via the antenna **156**.

In addition to processing communications signals, the DSP **158** provides for control of the receiver **150** and the transmitter **152**. For example, gains applied to communications signals in the receiver **150** and transmitter **152** may be adaptively controlled through automatic gain control algorithms implemented in the DSP **158**.

In a data communications mode, a received signal, such as a text message or web page download, is processed by the communications subsystem **101** and is input to the processing device **180**. The received signal is then further processed by the processing device **180** for an output to the display **160**, or alternatively to some other auxiliary I/O device **106**. A device user may also compose data items, such as e-mail messages, using the keypad **140** and/or some other auxiliary I/O device **106**, such as a touchpad, a rocker switch, a thumb-wheel, or some other type of input device. The composed data items may then be transmitted over the communications network **141** via the communications subsystem **101**.

In a voice communications mode, overall operation of the device is substantially similar to the data communications mode, except that received signals are output to a speaker **110**, and signals for transmission are generated by a microphone **112**. Alternative voice or audio I/O subsystems, such as a voice message recording subsystem, may also be implemented on the device **20**. In addition, the display **160** may also be utilized in voice communications mode, for example to display the identity of a calling party, the duration of a voice call, or other voice call related information.

Any short-range communications subsystem enables communication between the mobile device **20** and other proximate systems or devices, which need not necessarily be similar devices. For example, the short-range communications subsystem may include an infrared device and associated circuits and components, or a Bluetooth™ communications module to provide for communication with similarly-enabled systems and devices.

It should be understood that GSM is a preferred communications system and uses a radio interface that can have an uplink frequency band and downlink frequency band with about 25 MHz bandwidth, typically subdivided into **124** carrier frequency channels, each spaced about **200** KHz apart as non-limiting examples. Time division multiplexing can be used to allow about 8 speech channels per radio frequency channel, giving **8** radio time slots and 8 burst periods grouped into what is called a TDMA frame. For example, a channel data rate could be about 270.833 Kbps and a frame duration of about 4.615 milliseconds (MS) in one non-limiting example. The power output can vary from about 1 to about 2 watts.

Typically, linear predictive coding (LPC) can be used to reduce the bit rate and provide parameters for a filter to mimic a vocal track with speech encoded at about **13** Kbps. Four different cell sizes can be used in a GSM network, including macro, micro, pico and umbrella cells. A base station antenna can be installed on a master building above the average rooftop level in a macrocell. In a microcell, the antenna height can be under the average rooftop level and used in urban areas. Microcells typically have a diameter of about a few dozen meters and are used indoors. Umbrella cells can cover shadowed regions or smaller cells. Typically, the longest distance for the GSM specification covered by an antenna is about 22 miles depending on antenna height, gain and propagation conditions.

GSM systems typically include a base station subsystem, a network and switching subsystem, and a General Packet Radio Service (GPRS) core network. A subscriber identify module (SIM) is usually implemented in the communications device, for example, the well known SIM card, similar to a smart card containing the subscription information and phone book of a user. The user can also switch handsets or could change operators by changing a SIM.

The GSM signaling protocol has three general layers. Layer 1 is a physical layer using channel structures above the air interface. Layer 2 is the data link layer. Layer 3 is a signaling protocol, which includes three sublayers. These include a Radio Resources Management sublayer to control the setup, maintenance and termination of radio and fixed channels, including handovers. A Mobility Management sublayer manages the location updating and registration procedures and secures the authentication. A Connection Management sublayer handles general call control and manages supplementary services and the short message service. Signaling between different entities such as the Home Location Register (HLR) and Visiting Location Register (VLR) can be accomplished through a Mobile Application Part (MAP) built upon the Transaction Capabilities Application Part (TCAP) of the top layer of the Signaling System No. 7.

A Radio Resources Management (RRM) sublayer can oversee the radio and fixed link establishment between the mobile station and an MSE.

It is also possible to used Enhanced Data Rates for GSM Evolution (EDGE), as an enhancement to General Packet Radio Service (GPRS) networks. EDGE can use 8 Phase Shift Keying (8 PSK) and Gaussian Minimum Shift Keying (GMSK) for different modulation and coding schemes. A three-bit word can be produced for every changing carrier phase. A rate adaptation algorithm can adapt the Modulation and Coding Scheme (MCS) according to the quality of the radio channel and the bit rate and robustness of data transmission. Base stations are typically modified for EDGE use.

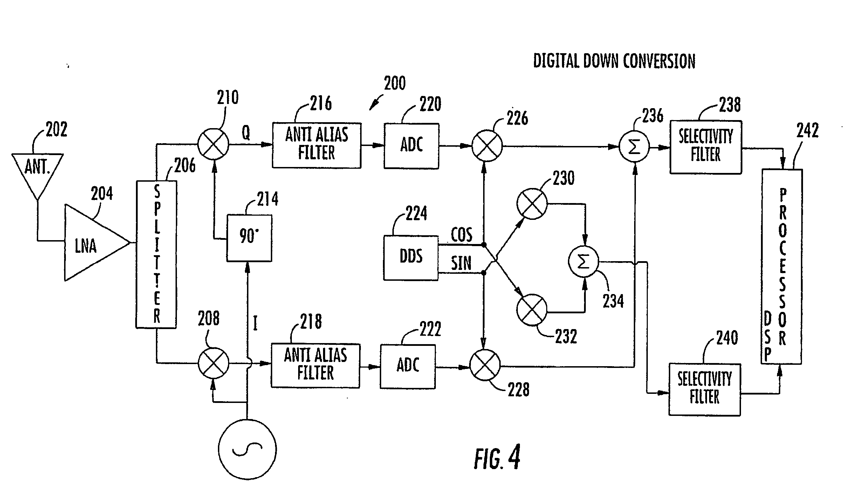

FIG. 4 is an example of a high-level block diagram and schematic circuit for a low-IF receiver that can be used with the system and method as described. The receiver **200** includes an antenna **202** that receives a communications signal and passes the signal to a low noise amplifier (LNA) **204**. The signal is split within a splitter **206** and passes into mixers **208**, **210**. A signal generator **212** generates a local oscillator (LO) signal to the mixers **208**, **210**. One of the local oscillator signals is phase changed by a non-ideal hybrid source or shifter **214**, creating phase imbalance at broadband. Respective signals are passed from respective mixers **208**, **210** as illustrated. Each signal passes into respective anti-alias filters **216**, **218** and then into respective analog/digital converters **220**, **222**. Digital mixing and demodulation occurs next. Each signal after conversion passes into a digital mixer circuit that includes multipliers **226**, **228**, with each also receiving a signal from a Direct Digital Synthesizer **224** as sine and cosine signals as illustrated. The signals from the Direct Digital Synthesizer **224** are multiplied in multipliers **230**, **232** and summed within summer **234** as part of digital mixing. Signals from mixers **226**, **228** are summed at summer **236**. The signals from the summers **234**, **236** are respectively filtered by selectivity filters **238**, **240** and then processed within processor **242**. The anti-alias filters can be non-ideal analog filters as a source of amplitude and phase imbalance at baseband.

In operation, after mixing in mixers **208**, **210**, the downconversion process begins. The mixer imbalance can create image problems as noted before. For example, negative frequencies can be translated to positive frequencies with significant attenuation. The Direct Digital Synthesizer with the multiplers can allow the shifting down to zero.

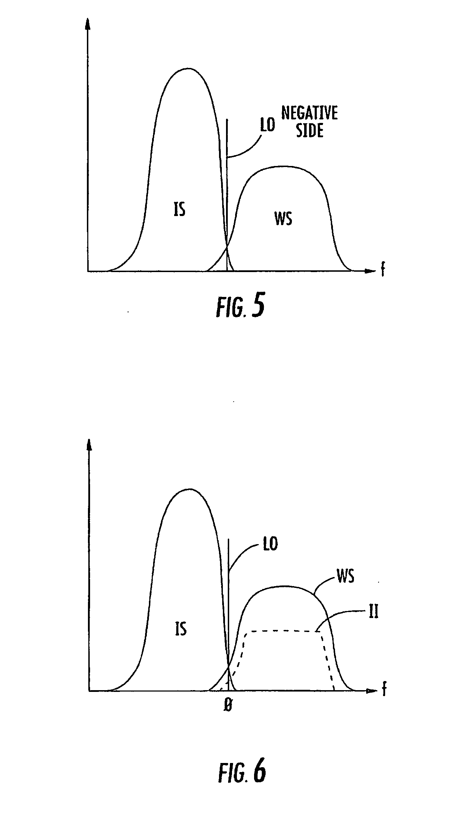

FIGS. 5-8 are graphs showing two possible scenarios for the local oscillator signal, also referred to more conveniently as LO, where the local oscillator can appear in the radio frequency RF, as illustrated. FIGS. 5 and 6 show the negative side LO. FIG. 5 shows the LO with a negative frequency offset from the central frequency of the wanted signal (WS). The interferer signal (IS) is shown on the left and the wanted signal on the right. The signal overlap shows the negative side LO. After the RF downconversion as shown in FIG. 6, the interferer image (II) appears because of the I/Q imbalance with the amplitude and phase.

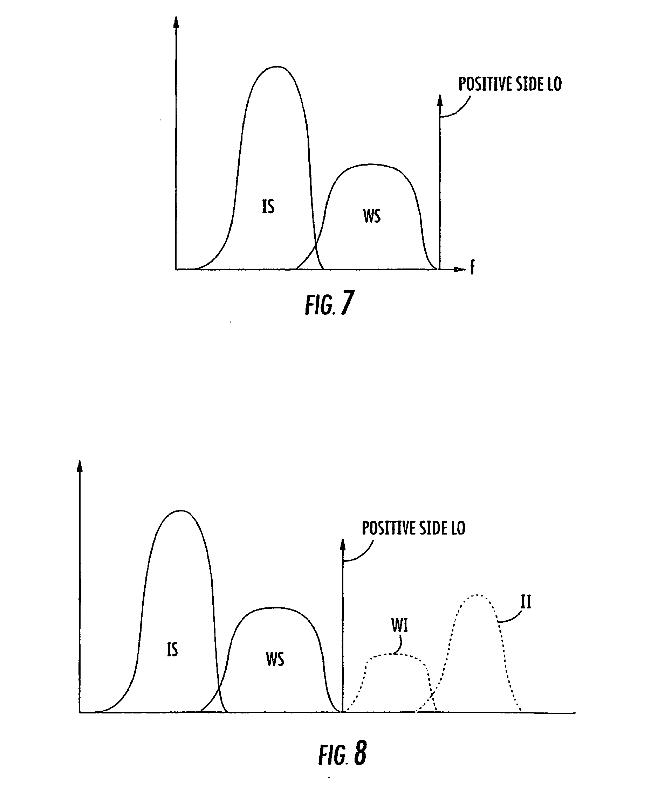

FIGS. 7 and 8 are graphs showing preferred examples with scenarios of the interferer and wanted signal, and the positive side LO with the positive frequency offset. FIG. 8 shows the interferer signal and wanted signal on the left side, and the wanted image (WI) and interferer image (II) on the right side as illustrated.

It should be understood that FIGS. 5 and 6 illustrate when the LO is between the two signals of the wanted and interferer, and thus, as the negative side LO because it is below the center of the wanted signal. After downconversion as shown in FIG. 6, the LO appears to be zero DC at a basically zero Hz interferer on the negative side. Because of this I/Q imbalance, the image of the interferer significantly reduces and the overlap appears with the wanted signal. The wanted signal appears to be degraded significantly because of the image that overlaps.

FIGS. 7 and 8 show the LO at the positive side such that after downconversion, the interferer on one side is relative to zero and there will be no overlap as the wanted signal. The selectivity filter as described before could remove some unwanted components, leaving wanted signals. Thus, it should be understood that in these examples, FIGS. 5 and 6 represent a case with bad performance, and FIGS. 7 and 8 represent a case with good performance. The system attempts to reach the better position of the local oscillator and tries to maintain the interferer signal on the same side on the wanted signal.

There follows next a pseudocode description using C programming for the system and method. It should be understood that the local oscillator in very low-IF receivers produces a single tone as an unmodulated carrier for the RF mixer input at a wanted GSM channel RF frequency, plus/minus very-low-IF, such that the system and method can dynamically choose the sign of the very-low-IF to obtain the best signal-to-noise ratio (SNR).

Three threads are described, each thread corresponding to a task of processing in the computer program. System initialization is a first thread that occurs one time, followed by a radio control thread and receiver demodulator thread, which are repeated continuously in a loop.

### Pseudocode Description

System initialization:

1. Allocate array CURRENT_LO_COUNTER for all available GSM channels. Set all entries to "0". This array defines how many times we will use currently winning LO side (with best SNR) until it will reach "0".

2. Allocate array LO_SIDE for all available GSM channels. Set all entries to "0" ("0" means low side LO with negative Very_Low_IF; "1" means high side LO with positive Very_Low_IF). This array will define currently used sign of Very_Low_IF.

3. Allocate array TOP_LO_COUNTER for all available GSM channels. Set all entries to "1". This array defines maximum numbers of tries system may apply best LO settings to particular channel without switching back to "worst" LO side to look for changes in the channel conditions.

4. Allocate array WINNING_LO_SNR for all available GSM channels. Set all entries to "0". This array contains SNRs of the winning LO side for each GSM channel.

Radio control thread:

1. If RF driver have to configure RF chipset to receive a regular GSM/GPRS burst then:

1.1. If CURRENT_LO_COUNTER for current GSM channel equal to "0" then program RF chipset to use logical inversion of current LO_SIDE (inverse Very_Low_IF sign).

1.2. If CURRENT_LO_COUNTER for current GSM channel is larger then "0" then program RF chipset to use current LO_SIDE (keep the same Very_Low_IF sign).

Receiver demodulator thread:

1. Demodulate received GSM/GPRS burst and get burst SNR.

2. If CURRENT_LO_COUNTER for current channel is equal to "0" (current SNR represents loosing LO side) then:

2.1. Set CURRENT_LO_COUNTER equal to TOP_LO_COUNTER for the current channel.

2.2. If current SNR is larger then WINNING_LO_SNR then:

2.2.1. If TOP_LO_COUNTER is equal to "1" (lowest possible TOP_LO_COUNTER) then:

2.2.1.1. Inverse current LO_SIDE (we have new winning LO side).

2.2.1.2. Update current WINNING_LO_SNR with current SNR value.

2.2.1.3. Set CURRENT_LO_COUNTER to "0".

2.2.2. If TOP_LO_COUNTER is LARGER then "1" then decrement TOP_LO_COUNTER.

2.3. If current SNR is smaller then WINNING_LO_SNR then increment TOP_LO_COUNTER (but no higher then defined maximum limit, in my implementation the highest possible TOP_LO_COUNTER = 60).

3. If CURRENT_LO_COUNTER for current channel is NOT equal to "0" then:

3.1. Store current SNR in the WINNING_LO_SNR array entry (corresponding to current channel).

3.2. Decrement CURRENT_LO_COUNTER for the current channel.

In the pseudocode above, SNR indicates the signal-to-noise ratio. IF indicates the Intermediate Frequency. LO indicates the local oscillator. It should be understood that in very low intermediate frequency receivers, it produces a single tone typically as an unmodulated carrier for the RF mixer input at the wanted GSM channel RF frequency as +/- very-low-IF. The system and method dynamically chooses the sign of the very-low-IF to obtain the best SNR.

It should be understood that an array is a collection of variables of the same type. Individual array elements can be identified by an integer index. In C the index typically begins at zero. There can be single dimensioned arrays or multiple dimensional arrays. It should be understood that a pointer can be used in place of an array. Also, typically dimensions are not fixed immediately. Space can be allocated as required. When passed as an argument to a function, the size of the array is not necessarily known. Although traditionally some array types in C were one-dimensional, and a fixed, static size specified a compile time, there are variable length arrays that can be used. A block of memory of arbitrary size can be allocated at run-time using a standard library and treated as an array. Pointers, of course, can be formed as a reference that records the address or location of an object in memory and can be manipulated using normal assignments or pointer arithmetic.

In the pseudocode identified above, the array of different channels depends on the form, and could support a plurality of different bands with each band having a set of GSM channels. For example, there could be a few hundred channels on each band. Of course, the more bands the device supports, the larger the array would be.

An array could define which side of the LO will be used for each particular channel. Throughout the description, it should be understood that in the pseudocode above, the term "winning" is also referred to as "better performing." The LO can be fixed in two fixed positions, i.e., positive and negative, corresponding to a frequency offset. Thus, one position could give the better performance as the "winning" or "better performing" side. The arrays can contain counters for each channel. A top counter could indicate how many iterations remain on one side. For example, if the system decides that a negative frequency offset gives the better performance, the system will stay at a negative position for an "n" number of GSM bursts. If the LO is at a negative position, this position could change to the positive as a double check to determine if something has changed on the positive side. Statistics will be calculated, and the top counter could define how many times the system will remain on the better performing or "winning" side. If the negative side is better performing and the top counter is ten, then ten bursts would be received sequentially without changing the LO side. More statistics would be obtained and at some point the system is confident that the negative gives the better performance.

In the system, there could be a reason for going to the positive side in this example. For example, the top LO counter could be at 60, and this many bursts would be received based on the LO position. The current counter could be an indicator of how many iterations are left to zero. Thus, the top counter can be the maximum allowed on one side, in this non-limiting example. This can be set to zero or one and will show which side will be used, indicating which side gives the better performance.

The system initialization thread occurs only once when the device or unit is "turned on." The radio control thread and receiver demodulator thread will cycle over and over in sequence with each other, with the radio control thread followed by the receiver demodulator thread when the burst is received.

In the radio control thread, the RF driver configures the RF chip set to receive a burst. There can be a logical inversion as illustrated.

In the system and method as described, some memory access is maintained in this embedded type of device with limited resources. This system and method provides a minimum amount of information that can be kept in the unit, thus solving some memory issues concerning speed and memory. There are always issues concerning RAM trade-offs used for the algorithm.

Concerning the receiver demodulation thread, the hardware can be set to one and the losing or poor performing side would give the worst or poorer performing performance. The system tries to receive bursts on the better performing side of the LO and the system often must go back to the worst or poorer performing side of the LO to double-check and determine if that side had become better performing. This is one reason why when the current LO counter reaches zero, or as soon as it will hit zero, the system switches to the other position and checks what happens. For example, if the environment changes, the other side could be the better performing side. Thus, the current LO counter can be cycled and kept in the loop. When the system reaches "zero," the system can go to the top position to start counting backward again. When the system goes to the worst or poorer performing LO setting, for example, and the radio environment has changed, the system may determine that it is no longer the worst or poorer performing LO setting, but it is better because the SNR at the worst or poorer performing LO position gives a significantly better SNR. At that time, the system can start reducing the LO counter for the "winning" or better performing side. The system may not switch immediately to the new LO side because this is a GSM system with fading conditions and there could be some false results. It is not desirable to switch based on a false result, and thus, the system decreases the top LO counter for the better performing side because it is less and less "winning" or "better performing."

At some point when the top LO counter reaches one, the system is not confident that side is the better performing. After the switch to the other LO position as the LO side, the system decrements until the system reaches "one" and at that point, there is some confidence that the previous better performing side is not winning or better performing any more and a switch must occur.

In the example of the pseudocode described above, the highest position possible was 60. This is only an example based upon a practical observation. For example, if the system peaks at a low value at 5, it will go to the "worst" or poorer performing LO position frequently and there could be a number of bursts received with lower SNR than expected and the performance will be degraded. But in this case, the algorithm will react very fast on the environment changes. It will efficiently "track" interferer signals. On the other hand, if the system peaks at high value (e.g., >100), overall performance in a static environment will be good. The algorithm will react slow if there are rapidly changing interferers. Based on practical observations, the value of "60" gives good performance for ETSI certification tests as well as maintaining system reaction reasonably fast. If there is a rapidly changing environment, the reactants of the algorithm would be high and would take some time to switch from one LO side to another and the algorithm could be slow. The number of counters can help alleviate this problem.

It should be understood that the algorithm for the system and method controls the synthesizer with one branch passing through a hybrid that can shift by 90 degrees and one branch directly to the mixer.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20), comprising:
a housing (21); and
a circuit board (67) carried by the housing and including radio frequency (RF) circuitry (101) and processor operative with each other, said RF circuitry comprising a low-IF receiver circuit (200) that is operative for maintaining an interferer signal at a same frequency side as a wanted signal relative to a local oscillator frequency setting, creating an interferer image signal, and filtering the image signal at substantially baseband frequency.

2. A mobile wireless communications device (20) according to Claim 1, wherein said RF circuitry (101) comprises a Digital Signal Processing (DSP) circuit operative for filtering said interferer image signal.

3. A mobile wireless communications device (20) according to Claim 1, wherein said RF circuitry (101) is operative for placing an interferer signal in the substantially baseband frequency where a highest out-of-band signal attenuation is implemented.

4. A mobile wireless communications device (20) according to Claim 1, wherein said RF circuitry (101) further comprises a mixer circuit (208, 210, 214) and a local oscillator circuit operative with the mixer circuit, and a demodulator circuit (238, 240) for demodulating signals from the mixer circuit and oscillator circuit, wherein said RF circuitry is operative for determining a better performing local oscillator frequency setting and a poorer performing local oscillator frequency setting based on signal-to-noise values obtained during demodulation.

5. A mobile wireless communications device (20) according to Claim 4, wherein said RF circuitry (101) is operative for using different low-IF local oscillator frequency settings for an RF channel based on the signal-to-noise values.

6. A mobile wireless communications device (20) according to Claim 4, wherein said communications signals comprise data bursts in accordance with the Global System for Mobile communications.

7. A mobile wireless communications device (20) according to Claim 4, wherein said RF circuitry (101) is operative for returning to a poorer performing local oscillator frequency setting from a better performing local oscillator frequency setting after a predetermined number of received data bursts to determine if the local oscillator frequency setting should be changed to adapt to a changed radio environment.

8. A method for enhancing low-IF receiver performance and rejecting an interferer signal, which comprises:
maintaining an interferer signal at a same frequency side as a wanted signal relative to a local oscillator frequency setting;
creating an interferer image signal; and
filtering the image signal at substantially baseband frequency.

9. A method according to Claim 8, which further comprises filtering the interferer image signal within a Digital Signal Processing (DSP) circuit.

10. A method according to Claim 8, which further comprises placing an interferer signal in a substantially baseband frequency where a highest out-of-band signal attenuation is implemented.

11. A method according to Claim 8, which further comprises:
downconverting signals from a received communications signal;
demodulating the downconverted signals; and
determining between a better performing local oscillator frequency setting and poorer performing local oscillator frequency setting based on signal-to-noise values obtained during demodulation.

12. A method according to Claim 11, which further comprises using different low-IF local oscillator frequency settings for an RF channel based on the signal-to-noise values.

13. A method according to Claim 11, wherein said communications signals comprise data bursts in accordance with the Global System for Mobile communications.

14. A method according to Claim 11, which further comprises returning to a poorer performing local oscillator frequency setting from a better performing local oscillator frequency setting after a predetermined number of received data bursts to determine if the local oscillator frequency setting should be changed to adapt to a changed radio environment.

15. A method according to Claim 11, which further comprises downconverting signals within a mixer (208, 210, 214) and local oscillator circuit.

16. A method according to Claim 8, which further comprises creating an interferer image signal from a wanted signal band.

17. A low-IF receiver (200), comprising:
a local oscillator and mixer circuit (208, 210, 214) for downconverting RF communications signals to low intermediate frequency (IF) signals near baseband;
an analog-to-digital converter circuit (220, 222) that receives the low IF signals and converts the low IF signals to digital signals; and
a digital mixer circuit (226, 228, 230, 232, 234, 236) and a processor (242) connected thereto that receives the digital signals and processes them at baseband, wherein said local oscillator and mixer circuit is operative with said digital mixer circuit and processor for maintaining an interferer signal at a same frequency side as a wanted signal relative to a local oscillator frequency setting, creating an interferer image signal and filtering the image signal at substantially baseband frequency.

18. A low-IF receiver (200) according to Claim 17, and further comprising a direct digital synthesizer (224) operative with said digital mixer circuit (226, 228, 230, 232, 234, 236).

19. A low-IF receiver (200) according to Claim 17, and further comprising an antenna (202), a low-noise amplifier (LNA) connected thereto (204), and a splitter circuit (206) connected to said local oscillator and mixer circuit (208, 210, 214) the receives RF communications signals and splits said RF communications signals for mixing within said local oscillator and mixer circuit.

20. A low-IF receiver (200) according to Claim 17, wherein said processor (242) is operative for producing in-phase (I) and quadrature (Q) output signals.

## Patentansprüche

1. Mobile drahtlose Kommunikationsvorrichtung (20), die aufweist:
ein Gehäuse (21); und
eine Leiterplatte (67), die getragen wird durch das Gehäuse und Funkfrequenz(RF bzw. HF - radio frequency)-Schaltungen (101) und einen Prozessor umfasst, die miteinander betriebsfähig sind, wobei die HF-Schaltungen eine niedrig-IF-Empfänger-Schaltung (200) aufweisen, die betriebsfähig ist zum Beibehalten eines Interferenz-Signals an einer selben Frequenzseite wie ein gesuchtes Signal relativ zu einer lokalen Oszillatoren-Frequenz-Einstellung, zum Erzeugen eines Interferenz-Spiegel-Signals und zum Filtern des Spiegel-Signals bei im Wesentlichen einer Basisband-Frequenz.

2. Mobile drahtlose Kommunikationsvorrichtung (20) gemäß Anspruch 1, wobei die HF-Schaltungen (101) eine DSP(Digital Signal Processing)-Schaltung aufweisen, die betriebsfähig ist zum Filtern des Interferenz-Spiegel-Signals.

3. Mobile drahtlose Kommunikationsvorrichtung (20) gemäß Anspruch 1, wobei die HF-Schaltungen (101) betriebsfähig sind zum Platzieren eines Interferenz-Signals in der im Wesentlichen Basisband-Frequenz, wo eine höchste Außerband-Signal-Dämpfung implementiert ist.

4. Mobile drahtlose Kommunikationsvorrichtung (20) gemäß Anspruch 1, wobei die HF-Schaltungen (101) weiter aufweisen eine Mischer-Schaltung (208, 210, 214) und eine lokale Oszillator-Schaltung, die betriebsfähig ist mit der Mischer-Schaltung, und eine Demodulator-Schaltung (238, 240) zum Demodulieren von Signalen von der Mischer-Schaltung und der Oszillator-Schaltung, wobei die HF-Schaltungen betriebsfähig sind zum Bestimmen einer besser arbeitenden lokalen Oszillator-Frequenzeilistellung und einer schlechter arbeitenden lokalen Oszillator-Frequenzeinstellung basierend auf Signal-zu-Rausch-Werten, die während der Demodulation erlangt werden.

5. Mobile drahtlose Kommunikationsvorrichtung (20) gemäß Anspruch 4, wobei die HF-Schaltungen (101) betriebsfähig sind zur Verwendung unterschiedlicher niedrig-IF lokaler Oszillator-Frequenzeinstellungen für einen HF-Kanal basierend auf den Signal-zu-Rausch-Werten.

6. Mobile drahtlose Kommunikationsvorrichtung (20) gemäß Anspruch 4, wobei die Kommunikationssignale Datenbursts in Übereinstimmung mit dem GSM-System (Global System for Mobile Communications) aufweisen.

7. Mobile drahtlose Kommunikationsvorrichtung (20) gemäß Anspruch 4, wobei die HF-Schaltungen (101) betriebsfähig sind zum Zurückkehren zu einer schlechter arbeitenden lokalen Oszillator-Frequenzeinstellung von einer besser arbeitenden lokalen Oszillator-Frequenzeinstellung nach einer vorgegebenen Anzahl von empfangenen Datenbursts, um zu bestimmen, ob die lokale Oszillator-Frequenzeinstellung verändert werden soll, um sich an eine veränderte Funkumgebung anzupassen.

8. Verfahren zum Verbessern einer niedrig-If-Emptänger-Leistung und Zurückweisen eines Interferenz-Signals, das aufweist:
Behalten eines Interferenz-Signals an einer selben Frequenzseite wie ein gesuchtes Signal relativ zu einer lokalen Oszillatoren-Frequenz-Einstellung;
Erzeugen eines Interferenz-Spiegel-Signals; und
Filtern des Spiegel-Signals bei im Wesentlichen einer Basisband-Frequenz.

9. Verfahren gemäß Anspruch 8, das weiter aufweist ein Filtern des Interferenz-Spiegel-Signals in einer DSP(Digital Signal Processing)-Schaltung.

10. Verfahren gemäß Anspruch 8, das weiter aufweist ein Platzieren eines Interferenz-Signals in einer im Wesentlichen Basisband-Frequenz, wo eine höchste Außerband-Signal-Dämpfung implementiert ist.

11. Verfahren gemäß Anspruch 8, das weiter aufweist:
Abwärtswandeln von Signalen von einem empfangenen Kommunikationssignal;
Demodulieren der abwärtsgewandelten Signale; und
Bestimmen zwischen einer besser arbeitenden lokalen Oszillator-Frequenzeinstellung und einer schlechter arbeitenden lokalen Oszillator-Frequenzeinstellung basierend auf Signal-zu-Rausch-Werten, die während der Demodulation erlangt werden.

12. Verfahren gemäß Anspruch 11, das weiter aufweist ein Verwenden unterschiedlicher niedrig-IF lokaler Oszillutor-Frequenzeinstellungen für einen HF-Kanal basierend auf den Signal-zu-Rausch-Werten.

13. Verfahren gemäß Anspruch 11, wobei die Kommunikationssignale Datenbursts in Übereinstimmung mit dem GSM-System (Global System for Mobile Communications) aufweisen.

14. Verfahren gemäß Anspruch 11, das weiter aufweist ein Zurückkehren zu einer schlechter arbeitenden lokalen Oszillator-Frequenzeinstellung von einer besser arbeitenden lokalen Oszillator-Frequenzeinstellung nach einer vorgegebenen Anzahl von empfangenen Datenbursts, um zu bestimmen, ob die lokale Oszillator-Frequenzeinstellung verändert werden soll, um sich an eine veränderte Funkumgebung anzupassen.

15. Verfahren gemäß Anspruch 11, das weiter aufweist ein Abwärtswandeln von Signalen in einem Mischer (208, 210, 214) und einer lokalen Oszillator-Schaltung.

16. Verfahren gemäß Anspruch 8, das weiter aufweist ein Erzeugen eines Interferenz-Spiegel-Signals aus einem gesuchten Signalband.

17. Niedrig-IF-Empfänger (200), der aufweist:
eine lokale Oszillator- und Mischer-Schaltung (208, 210, 214) zum Abwärtswandeln von HF-Kommunikationssignalen zu niedrigen Zwischenfrequenz(IF - intennediate frequency)-Signalen nähe eines Basisbands;
eine Analog-Digital-Umwandlungsschaltung (220, 222), welche die niedrig-IF-Signale empfängt und die niedrig-IF-Signale in digitale Signale umwandelt; und
eine digitale Mischer-Schaltung (226, 228, 230, 232, 234, 236) und einen Prozessor (242), der damit verbunden ist, der die digitalen Signale empfängt und sie bei dem Basisband verarbeitet, wobei die lokale Oszillator- und Mischer-Schaltung betriebsfähig ist mit der digitalen Mischer-Schaltung und dem Prozessor zum Beibehalten eines Interferenz-Signals an einer selben Frequenzseite wie ein gesuchtes Signal relativ zu einer lokalen Oszillatoren-Frequenz-Einstellung, zum Erzeugen eines Interferenz-Spiegel-Signals und zum Filtern des Spiegel-Signals bei im Wesentlichen der Basisband-Frequenz.

18. Niedrig-IF-Empfänger (200) gemäß Anspruch 17 und weiter aufweisend einen direkten digitalen Synthetisierer (224), der betriebsfähig ist mit der digitalen Mischer-Schaltung (226, 228, 230, 232, 234, 236).

19. Niedrig-IF-Empfänger (200) gemäß Anspruch 17 und weiter aufweisend eine Antenne (202), einen damit verbundenen rauschannen Verstärker (LNA - low-noise amplifier) (204), und eine Splitter-Schaltung (206), die mit der lokalen Oszillator- und Mischer-Schaltung (208, 210, 214) verbunden ist, die HF-Kommunikationssignale empfängt und die HF-Kommunikationssignale trennt zum Mischen in der lokalen Oszillator- und Mischer-Schaltung.

20. Niedrig-IF-Empfänger (200) gemäß Anspruch 17, wobei der Prozessor (242) betriebsfähig ist zum Erzeugen von Inphase(I)- und Quadratur(Q)-Ausgabesignalen.

## Revendications

1. Dispositif de communication mobile sans fil (20) comprenant :
un boîtier (21) ; et
une carte de circuits (67) supportée par le boîtier et comprenant des circuits de radiofréquences (RF) (101) et un processeur, qui sont en mesure de coopérer l'un avec l'autre, lesdits circuits RF comprenant un circuit récepteur à FI basse (200) qui est en mesure de maintenir un signal brouilleur sur le même côté de fréquence qu'un signal voulu, par rapport à un réglage de fréquence d'un oscillateur local, de créer une image de signal brouilleur et de filtrer l'image de signal à une fréquence qui est substantiellement la bande de base.

2. Dispositif de communication mobile sans fil (20) selon la revendication 1, dans lequel lesdits circuits RF (101) comprennent un circuit de traitement numérique de signal (DSP pour « *Digital Signal Processing* ») en mesure de filtrer ladite image de signal brouilleur.

3. Dispositif de communication mobile sans fil (20) selon la revendication 1, dans lequel lesdits circuits RF (101) sont en mesure de placer un signal brouilleur dans la fréquence qui est substantiellement la bande de base, dans laquelle une atténuation maximale du signal hors bande est mise en oeuvre.

4. Dispositif de communication mobile sans fil (20) selon la revendication 1, dans lequel lesdits circuits RF (101) comprennent en outre un circuit mélangeur (208, 210, 214) et un circuit d'oscillateur local coopérant avec le circuit mélangeur, ainsi qu'un circuit démodulateur (238, 240) destiné à démoduler des signaux provenant du circuit mélangeur et du circuit oscillateur, dans lequel lesdits circuits RF sont en mesure de déterminer un réglage de fréquence de l'oscillateur local offrant de meilleures performances et un réglage de fréquence de l'oscillateur local offrant de moindres performances, sur la base de valeurs de rapport signal sur bruit obtenues pendant la démodulation.

5. Dispositif de communication mobile sans fil (20) selon la revendication 4, dans lequel lesdits circuits RF (101) sont en mesure d'utiliser, pour un canal RF, différents réglages de fréquence d'oscillateur local pour la FI basse, en fonction des valeurs de rapport signal sur bruit.

6. Dispositif de communication mobile sans fil (20) selon la revendication 4, dans lequel lesdits signaux de communication comprennent des rafales de données selon la norme de communication GSM (pour « *Global System for Mobile communication » -* Système mondial de communication mobile).

7. Dispositif de communication mobile sans fil (20) selon la revendication 4, dans lequel lesdits circuits RF (101) sont en mesure de revenir à un réglage de fréquence de l'oscillateur local offrant de moindres performances, à partir d'un réglage de fréquence de l'oscillateur local offrant de meilleures performances, après un nombre prédéterminé de rafales de données reçues, afin de déterminer si le réglage de fréquence de l'oscillateur local doit être modifié afin de s'adapter à un environnement radio qui a changé.

8. Procédé d'amélioration des performances d'un récepteur à FI basse et de réjection d'un signal brouilleur, comprenant les étapes consistant à :
maintenir un signal brouilleur sur le même côté de fréquence qu'un signal voulu, par rapport à un réglage de fréquence de l'oscillateur local ;
créer une image du signal brouilleur ; et
filtrer l'image de signal à une fréquence qui est substantiellement la bande de base.

9. Procédé selon la revendication 8, comprenant en outre l'étape consistant à filtrer l'image de signal brouilleur à l'intérieur d'un circuit de traitement numérique de signal (DSP).

10. Procédé selon la revendication 8, comprenant en outre l'étape consistant à placer un signal brouilleur dans une fréquence qui est substantiellement la bande de base, dans laquelle une atténuation maximale du signal hors bande est mise en oeuvre.

11. Procédé selon la revendication 8, comprenant en outre les étapes consistant à :
abaisser la fréquence des signaux à partir d'un signal de communication reçu ;
démoduler les signaux abaissés en fréquence ; et
choisir entre un réglage de fréquence de l'oscillateur local offrant de meilleures performances et un réglage de fréquence de l'oscillateur local offrant de moindres performances, sur la base des valeurs de rapport signal sur bruit obtenues pendant la démodulation.

12. Procédé selon la revendication 11, comprenant en outre l'étape consistant à utiliser, pour un canal RF, des réglages de fréquence de l'oscillateur local pour la FI basse, en fonction des valeurs de rapport signal sur bruit.

13. Procédé selon la revendication 11, dans lequel lesdits signaux de communication comprennent des rafales de données selon la norme de communication GSM (pour « *Global System for Mobile communication » -* Système mondial de communication mobile).

14. Procédé selon la revendication 11, comprenant en outre l'étape consistant à revenir à un réglage de fréquence de l'oscillateur local offrant de moindres performances, à partir d'un réglage de fréquence de l'oscillateur local offrant de meilleures performances, après un nombre prédéterminé de rafales de données reçues, afin de déterminer si le réglage de fréquence de l'oscillateur local doit être modifié afin de s'adapter à un environnement radio qui a changé.

15. Procédé selon la revendication 11, comprenant en outre l'étape consistant à abaisser la fréquence de signaux au sein d'un circuit mélangeur (208, 210, 214) et oscillateur local.

16. Procédé selon la revendication 8, comprenant en outre l'étape consistant à créer une image de signal brouilleur à partir d'une bande de signal voulu.

17. Récepteur à FI basse (200), comprenant :
un circuit oscillateur local et mélangeur (208, 210, 214) destiné à abaisser la fréquence de signaux de communication RF et à fournir des signaux de fréquence intermédiaire (FI) basse proche de la bande de base ;
un circuit convertisseur analogique-numérique (220, 222) qui reçoit les signaux à FI basse et convertit les signaux à FI basse en signaux numériques ; et
un circuit mélangeur numérique (226, 228, 230, 232, 234, 236) et un processeur (242) connecté à celui-ci, qui reçoit les signaux numériques et les traite en bande de base, dans lequel ledit circuit oscillateur local et mélangeur est en mesure, avec ledit circuit mélangeur numérique et ledit processeur, de maintenir un signal brouilleur sur le même côté de fréquence qu'un signal voulu, par rapport à un réglage de fréquence de l'oscillateur local, de créer une image de signal brouilleur et de filtrer l'image de signal à une fréquence qui est substantiellement la bande de base.

18. Récepteur à FI basse (200) selon la revendication 17, comprenant en outre un synthétiseur numérique direct (224) en mesure de coopérer avec ledit circuit mélangeur numérique (226, 228, 230, 232, 234, 236).

19. Récepteur à FI basse (200) selon la revendication 17, comprenant en outre une antenne (202), un amplificateur à faible bruit (204) connecté à celle-ci et un circuit diviseur (206) connecté audit circuit oscillateur local et mélangeur (208, 210, 214) qui reçoit les signaux de communication RF et divise lesdits signaux de communication RF afin qu'ils soient mélangés dans ledit circuit oscillateur local et mélangeur.

20. Récepteur à FI basse (200) selon la revendication 17, dans lequel ledit processeur (242) est en mesure de produire des signaux de sortie en phase (I) et en quadrature (Q).
